# EUROPÄISCHE PATENTSCHRIFT

(11) **EP 1 729 454 B1**
(45) Veröffentlichungstag und Bekanntmachung des Hinweises auf die Patenterteilung: **08.12.2010**
(21) Anmeldenummer: 06009623.7
(22) Anmeldetag: 10.05.2006
(51) Int. Cl.: H04L 12/46, H04L 12/42, H04L 12/423, H04L 29/08, H04L 12/66

(54) **Vorrichtung und Verfahren zur kombinierten Übertragung von Ein-/Ausgabedaten in Automatisierungs-Bussystemen**
Apparatus and method for a combined transmission of input/output data in automation bus systems
Dispositif et procédé pour une transmission combinée de données d'entrée-sortie dans des systèmes bus d'automatisation

(30) Priorität: 01.06.2005 DE 102005025582
(43) Veröffentlichungstag der Anmeldung: 06.12.2006
(73) Patentinhaber: Phoenix Contact GmbH & Co. KG, 32825 Blomberg (DE)
(72) Erfinder: Kuschke, Detlev, 32816 Schieder-Schwalenberg (DE); Jasperneite, Jürgen, 32839 Steinheim (DE)
(74) Vertreter: Herden, Andreas F.

(56) Entgegenhaltungen:
- WO-A-2004/054207
- DE-A1- 19 851 245
- HANKS S ET AL: "Generic Routing Encapsulation (GRE)" NETWORK WORKING GROUP REQUEST FOR COMMENTS, Oktober 1994 (1994-10), Seiten 1-8, XP002253326

## Beschreibung

Die Erfindung betrifft allgemein Automatisierungs-Systeme, insbesondere die Datenübertragung in derartigen Systemen.

Aus dem Stand der Technik sind verschiedene Übertragungsprotokolle für Automatisierungs-Systeme allgemein bekannt. Darunter zählen unter anderem das ProfiNet-System und Feldbus-Systeme, wie etwa das Interbus-System. Diese verbreiteten Bussysteme verdrängen dabei proprietäre Lösungen in der Prozeßautomatisierung immer mehr. Allerdings ist es wünschenswert, die Kompatibilität zwischen den verschiedenen Systemen zu erhöhen und deren Vorteile miteinander kombinieren zu können. Feldbussysteme arbeiten in der Regel mit Übertragungsraten kleiner als 10 Mbit/s. Andererseits sind die eingesetzten Protokolle sehr effektiv und echtzeitfähig. Demgegenüber arbeiten Ethernet-Systeme, zu denen auch das ProfiNet-System zu rechnen ist, vielfach mit höheren Übertragungsraten.

Weitere Ansätze sind im Dokument WO 2004/054207 beschrieben.

Aus der DE 198 51 245 A1 ist dazu eine Feldbus-Komponente, ein Kommunikationssystem und ein Verfahren bekannt, welche es gestatten, Feldbus-Komponenten mit einer Hochgeschwindigkeits-Datenübertragung, wie etwa dem Ethernet zu kombinieren. Dazu ist eine Feldbuskomponente vorgesehen, welche eine ein Feldbus-Protokoll verarbeitende Datensicherungs-Schicht (entsprechend der Schicht 2 des OSI-Referenzmodells) und eine physikalische Schicht (entsprechend der Schicht 1 des OSI-Referenzmodells) aufweist, wobei die physikalische Schicht für eine Hochgeschwindigkeits-Datenübertragung ausgebildet ist. Die beiden Schichten sind mit einer Schnittstelle verbunden. Außerdem ist eine Schicht zum Anpassen der ein Feldbus-Protokoll verarbeitenden Datensicherungsschicht an die physikalische Schicht vorgesehen.

Bei der in diesem Stand der Technik vorgeschlagene Lösung ist lediglich die physikalische Schicht zur Hochgeschwindigkeits-Übertragung ausgebildet. Die Datensicherungsschicht mit der Medium-Zugriffs-Steuerschicht arbeitet dabei gemäß einem Feldbus-Protokoll. Lediglich die physikalische Übertragung der Rahmendaten erfolgt über ein Medium zur Hochgeschwindigkeits-Übertragung. Das System erlaubt jedoch in dieser Form noch keine Integration anderer Netzwerkkomponenten, da die einzelnen Feldbus-Komponenten nicht unterscheiden können, ob es sich bei den übertragenen Daten um Daten gemäß einem Feldbus-Protokoll handelt oder nicht.

Der Erfindung liegt demgegenüber die Aufgabe zugrunde, die wechselseitige Integration von Komponenten, die über ein Feldbus-Protokoll steuern oder gesteuert werden, mit anderen mit einem Ethernet-Netzwerk vernetzbaren Komponenten zu verbessern.

Diese Aufgabe wird bereits in höchst überraschend einfacher Weise durch den Gegenstand der unabhängigen Ansprüche gelöst. Vorteilhafte Weiterbildungen und Ausgestaltungen der Erfindung sind in den Unteransprüchen angegeben.

Demgemäß sieht die Erfindung eine Anlage mit mehreren über ein Ethernet-Netzwerk miteinander verbundenen Komponenten vor gemäß Anspruch 1, wobei zumindest eine erste der Komponenten eine Einrichtung zum Auslesen von für die Komponente bestimmten Daten aus einem Summenrahmen mittels eines Summenrahmen-Protokolls, sowie eine Einrichtung zum Auslesen des Summenrahmens aus dem Datenteil eines Ethernet MAC-Rahmens aufweist, wobei zumindest eine der Komponenten der Anlage eine Einrichtung zur Einbettung des Summenrahmens in den Datenteil einen Ethernet-MAC-Rahmens und eine Einrichtung. zur Übertragung des Ethernet-MAC-Rahmens über das Ethernet-Netzwerk aufweist, und wobei zumindest eine der Komponenten eine Einrichtung zur Einfügung einer Kennung in den Ethernet-MAC-Rahmen aufweist, die angibt, ob der Datenteil des Ethernet-MAC-Rahmens einen Summenrahmen enthält. Eine derartige Anlage umfaßt dabei vorzugsweise eine automatisierte Fertigungsanlage, wobei jedoch nicht ausgeschlossen wird, daß sich die Erfindung auch für andere Steuerprozesse verwenden läßt.

Ein erfindungsgemäßes Verfahren gemäß Anspruch 19 zur Datenübertragung in einer Anlage mit mehreren über ein Ethernet-Netzwerk miteinander verbundenen Komponenten, insbesondere in einer erfindungsgemäßen Anlage, insbesondere auch zur Steuerung eines automatisierten Fertigungsprozesses basiert dann darauf, daß ein Summenrahmen erzeugt, der Summenrahmen in den Datenteil eines Ethernet-MAC-Rahmen eingebettet und eine Kennung eingefügt wird, daß der Ethernet-MAC-Rahmen einen Summenrahmen zur Verarbeitung gemäß eines Feldbus-Protokolls enthält, wobei der Ethernet-MAC-Rahmen dann als Telegramm über das Ethernet-Netzwerk übertragen und von zumindest einer ersten Komponente, die zur Verarbeitung von Daten nach einem Feldbus-Protokoll ausgebildet ist, in Ansprechen auf das Feststellen, daß die Kennung vorhanden ist, für sie bestimmte Daten aus einem Summenrahmen nach einem Summenrahmen-Protokoll aus dem Summenrahmen im Ethernet-MAC-Rahmen ausliest.

Mittels der Erfindung kann so eine schnelle Sensor/Aktor-Kommunikation, wie sie für viele Feldbus-Protokolle typisch ist, mit der Standard-Ethernet auf einem Übertragungsmedium kombiniert werden. Dies erlaubt damit auch bei der Nutzung von Ethernet als Übertragungsmedium das Steuern zeitkritischer Prozesse. Außerdem kann ein gemeinsames Installationskonzept für Feldbus- und Ethernet-Systeme genutzt werden.

In bevorzugter Weiterbildung der Erfindung umfaßt eine der Komponenten eine Kopfstation mit einer Master-Einheit zur Steuerung des Busverkehrs mit der zumindest einen Komponente mit der Einrichtung zum Auslesen von für die Komponente bestimmten Daten aus einem Summenrahmen mittels eines Summenrahmen-Protokolls. Durch das Steuern des Busverkehrs mit der zumindest einen Komponente die zur Verarbeitung von Daten nach einem Feldbus-Protokoll ausgebildet ist, durch die Master-Einheit der Kopfstation kann vorteilhaft ein für viele Feldbus-Arten typischer Kommunikationsablauf implementiert werden. Insbesondere kann dabei in der Kopfstation mit der Master-Einheit auch ein Summenrahmen mit Steuerungsdaten erzeugt, in den Datenteil eines Ethernet-MAC-Rahmens eingebettet und der Ethernet-MAC-Rahmen an die zumindest eine Komponente, die zur Verarbeitung von Daten nach einem Feldbus-Protokoll ausgebildet ist, über das Ethernet-Netzwerk übertragen werden.

Insbesondere können erfindungsgemäß mehrere, bevorzugt alle Komponenten mit einer Einrichtung zum Auslesen von für die Komponente bestimmten Daten aus einem Summenrahmen mittels eines Summenrahmen-Protokolls über Daten in einem gemeinsamen Summenrahmen gesteuert. Zur Reallisierung dieser Weiterbildung der Erfindung ist dementsprechend die Einrichtung zur Einbettung des Summenrahmens in den Datenteil einen Ethernet-MAC-Rahmens zur Einbettung eines gemeinsamen Summenrahmens für mehrere, insbesondere alle Komponenten mit einer Einrichtung zum Auslesen von für die Komponente bestimmten Daten aus einem Summenrahmen mittels eines Summenrahmen-Protokolls ausgebildet.

Außerdem können auch ein oder mehrere Komponenten zum Einfügen von Daten in den Summenrahmen, beispielsweise Sensor-Komponenten vorhanden sein. Diese Komponenten, die dann ebenfalls zur Verarbeitung von Daten nach einem Feldbus-Protokoll ausgebildet sind, können beim Empfang eines Ethernet-MAC-Rahmens in Ansprechen auf das Feststellen, daß die Kennung vorhanden ist, für eine weitere Komponente bestimmte Daten in den Summenrahmen im Ethernet-MAC-Rahmen einfügen.

Die Kennung wird besonders bevorzugt mittels einer entsprechend dafür ausgebildeten Einrichtung in den Header eingefügt. Damit braucht der Datenteil des Rahmens besonders vorteilhaft erst gar nicht ausgelesen werden, um feststellen zu können, ob der Rahmen Summenrahmen-Daten enthält.

Die Verarbeitung der Ethernet-MAC-Rahmen in der oder den ersten Komponenten erfolgt bevorzugt unter Verwendung einer Schaltereinrichtung. Dies kann dann unter Ansprechen darauf, daß die Kennung das Vorhandensein von Summenrahmen-Daten im Ethernet-MAC-Rahmen anzeigt, die Summenrahmen-Daten der Einrichtung zum Auslesen von für die Komponente bestimmten Daten aus dem Summenrahmen zuführen. Ist eine andere Kennung vorhanden, kann dann besonders vorteilhaft die Schaltereinrichtung unter Ansprechen darauf, daß die Kennung das Fehlen von Summenrahmen-Daten im Ethernet-MAC-Rahmen anzeigt, die Daten an der Einrichtung zum Auslesen von für die Komponente bestimmten Daten aus dem Summenrahmen vorbeileiten.

Es können außerdem noch weitere Kennungen vorgesehen werden, um den Datenverkehr zu steuern. So ist gemäß noch einer vorteilhaften Weiterbildung vorgesehen, daß die Schaltereinrichtung unter Ansprechen darauf, daß die Kennung das Fehlen von Summenrahmen-Daten im Ethernet-MAC-Rahmen, jedoch die Bestimmung der Rahmendaten für diese Komponente anzeigt, die Daten einer weiteren internen Verarbeitungseinrichtung der Komponente zuführt.

Mit der Erfindung wird eine.vollständige Integration von ersten Komponenten für die Verarbeitung von Summenrahmen-Daten in ein Ethernet-Netzwerk erreicht. Damit wird es dann auch besonders vorteilhaft möglich, andere Komponenten einzubinden. Dazu ist gemäß einer weiteren Ausführungsform der Erfindung zumindest eine zweite über das Ethernet-Netzwerk angeschlossene Komponente vorgesehen, welche zur Verarbeitung von für die Komponente bestimmten Daten aus einem Etherner-MAC-Rahmen mittels eines von einem Summenrahmen-Protokoll verschiedenen Protokoll ausgebildet ist. Eine derartige Komponente kann beispielsweise eine Komponente zur Verarbeitung von Daten gemäß dem ebenfalls häufig in der Prozessautomation eingesetzten ProfiNet-Protokolls sein. Werden zusätzlich Telegramme versendet, die keine,Summenrahmendaten, beispielsweise also Daten zur Verarbeitung nach dem ProfiNet-Protokoll enthalten, so kann zumindest eine erste Komponente auch als Repeater für derartige Telegramme ausgebildet sein.

Summenrahmen-Protokolle, wie etwa das Interbus-Protokoll eignen sich insbesondere zur Übertragung und Verarbeitung von zeitkritischen Daten. Um bei der erfindungsgemäßen Übertragung des Summenrahmens in einem Ethernet-MAC-Rahmen das rechtzeitige Versenden und Empfangen der Summenrahmen-Daten an ihrem Bestimmungsort sicherzustellen, ist gemäß noch einer Weiterbildung der Erfindung daran gedacht, die Komponenten so zu parametrieren, daß die Übertragung von Telegrammen mit im Ethernet-MAC-Rahmen enthaltenem Summenrahmen und anderen Telegrammen in aufeinanderfolgenden Zeitschlitzen vorgegebener Länge erfolgt.

Alternativ oder zusätzlich können die Komponenten auch so parametriert werden, daß eine vorgegebene Reihenfolge von Telegrammen mit im Ethernet-MAC-Rahmen eingebetteten Summenrahmen und anderen Telegrammen eingehalten wird. Beispielsweise kann dazu jeweils nach einem Telegramm mit im Ethernet-MAC-Rahmen eingebetteten Summenrahmem ein Telegramm mit einem anderen Inhalt versendet werden. Ebenso kann vorgesehen werden, daß eine Versendung eines Telegramms mit einem anderen Inhalt nur jeweils nach einer vorgegebenen Anzahl von Telegrammen mit im Ethernet-MAC-Rahmen eingebetteten Summenrahmen erfolgen.

Ebenfalls günstig zur Verarbeitung zeitkritischer Daten ist es, wenn nach einer Übertragung eines Telegramms mit im Ethernet-MAC-Rahmen enthaltenem Summenrahmen eine gleicheitige Datensicherung von mehreren, insbesondere von allen ersten Komponenten, welche Daten aus dem Summenrahmen verarbeiten, vorgenommen wird.

Dies kann in einfacher Weise mittels einer Auswerteschaltung und einer zusätzlichen Schaltungseinrichtung in Form eines Umschalters geschehen. Dazu sind mehrere erste Komponenten mit dem Ethernet-Netzwerk verbunden, wobei die Komponenten einen Umschalter aufweisen, mit dem deren Schieberegister überbrückt und eine Erkennungsschaltung an die Übertragungsleitung angeschaltet wird, welche ein Steuersignal erkennt, wobei unter Ansprechen auf das Steuersignal eine Datensicherung von der Komponente vorgenommen wird. Diese Weiterbildung der Erfindung erlaubt dann ebenso wie etwa ein Interbus-System die Verarbeitung von Daten zu genau vorgebbaren Zeitpunkten.

Auch das Versenden von Daten der ersten Komponenten erfolgt vorteilhaft nicht zu beliebigen Zeitpunkten, um Kollisionen mit anderen Telegrammen zu vermeiden. Eine Weiterbildung der Erfindung sieht dazu vor, daß erste Komponenten, die auch zum Versenden von Daten, insbesondere an eine Komponente mit einer Master-Einrichtung einen Zwischenspeicher aufweisen, welcher die Daten, insbesondere bereits die Ethernet-Telegramme sammelt. Die Ethernet-Telegramme können dann vorteilhaft nach Übertragung des Telegramms mit dem Summenrahmen übertragen werden.

Die Verarbeitung der Daten in den ersten Komponenten einschließlich des Auslesens der für die Komponenten bestimmten Daten aus dem Summenrahmen wird besonders bevorzugt durch einen integrierten Baustein vorgenommen. Demgemäß liegt es auch im Rahmen der Erfindung, einen solchen Baustein anzugeben. Ein erfindungsgemäßer integrierter Baustein, insbesondere für eine erste Komponente einer wie vorstehend beschriebenen Anlage umfaßt demgemäß eine Einrichtung zum Auslesen von für die Komponente bestimmten Daten aus einem Summenrahmen mittels eines Summenrahmen-Protokolls, eine Einrichtung zum Auslesen des Summenrahmens aus dem Datenteil eines Ethernet-MAC-Rahmens, sowie eine Einrichtung zum Auswerten einer Kennung im Ethernet-MAC-Rahmen, die angibt, ob der Datenteil des Ethernet-MAC-Rahmens einen Summenrahmen enthält, wobei die Schaltung des Bausteins eingerichtet ist, unter Ansprechen auf das Vorhandensein der Kennung die für die Komponente bestimmten Daten auszulesen und an wenigstens einem Ausgang des Bausteins zur Verfügung zu stellen.

Eine insbesondere mit einem derartigen Baustein ausgestattete und/oder zur Durchführung des erfindungsgemäßen Verfahrens ausgebildete erfindungsgemäße erste Komponente für eine solche Anlage umfasst dementsprechend eine Einrichtung zum Auslesen von für die Komponente bestimmten Daten aus einem Summenrahmen mittels eines Summenrahmen-Protokolls, eine Einrichtung zum Auslesen des Summenrahmens aus dem Datenteil eines Ethernet-MAC-Rahmens, sowie eine Einrichtung zum Auswerten einer Kennung im Ethernet-MAC-Rahmen, die angibt, ob der Datenteil des Ethernet-MAC-Rahmens einen Summenrahmen enthält, wobei die Komponente eingerichtet ist, unter Ansprechen auf das Vorhandensein der Kennung die für die Komponente bestimmten Daten auszulesen und zu verarbeiten.

Die ersten Komponenten können erfindungsgemäß, wie etwa bei einem Interbus-System üblich, ringförmig miteinander vernetzt werden, um auch unter Verwendung von Ethernetrahmen eine Datenverarbeitung entsprechend dem Interbus-Protokoll vornehmen zu können.

Insbesondere kann die Anlage zumindest eine E/A-Station mit mehreren ersten Komponenten umfassen, wobei Daten zu den ersten Komponenten der E/A-Station in Telegrammen mit jeweils einem Summenrahmen übertragen werden, welcher die Daten eines Buszyklus für die ersten Komponenten enthält. Die Steuerung der E/A-Station, auch eine Steuerung mehrerer solcher E/A-Station kann vorteilhaft mittels einer speicherprogrammierbaren Steuerung erfolgen.

Die Erfindung wird nachfolgend anhand von Ausführungsbeispielen unter Bezugnahme auf die beigefügten Zeichnungen näher erläutert. Dabei beziehen sich gleiche Bezugszeichen auf gleiche oder ähnliche Teile und Einrichtungen. Es zeigen:
- Fig. 1: den Aufbau eines Ausführungsbeispiels einer erfindungsgemäßen Anlage als Blockschaltbild,
- Fig. 2A: den Aufbau der versendeten Summenrahmen,
- Fig. 2B: den Aufbau eines Ethernet-Telegramms
- Fig. 3: die Integration des Summenrahmens in den Datenbereich des verwendeten Ethernet-MAC-Rahmens, und
- Fig. 4: den Aufbau einer Komponente der Anlage.

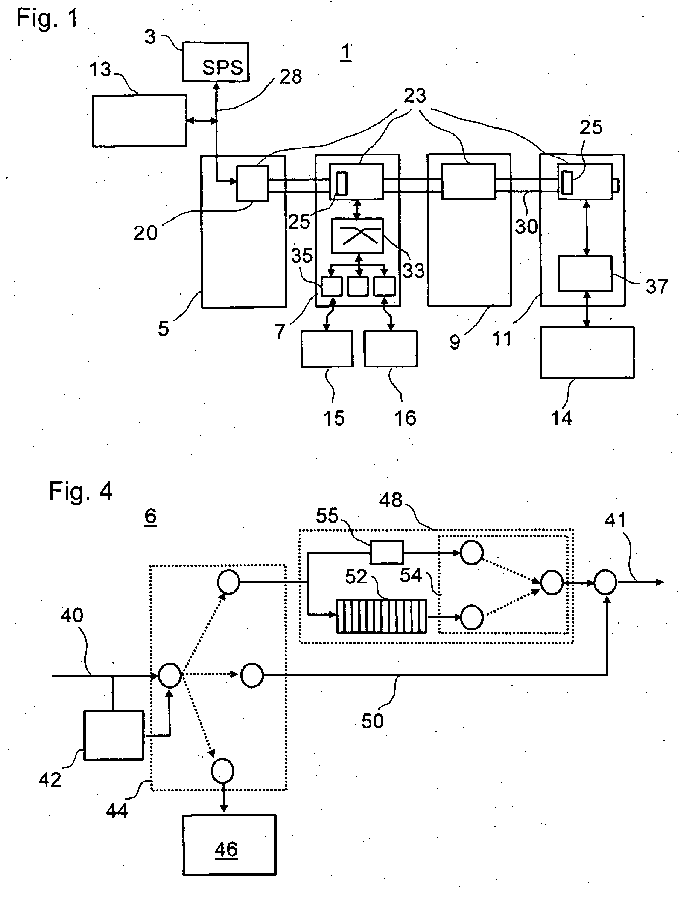

Fig. 1 zeigt ein Beispiel eines erfindungsgemäßen Systemaufbaus einer als Ganzes mit dem Bezugszeichen 1 bezeichneten Anlage. Diese Anlage kann insbesondere eine automatisierte Fertigungsanlage umfassen.

An einer Standard-SPS 3 befinden sich, z. B. über ein Ethernet-Protokoll, wie etwa das ProfiNet-Protokoll mit einer Übertragungsrate von 100 Mbd miteinander verbunden, erfindungsgemäße Stationen, von denen in Fig. 1 eine Station 2 dargestellt ist. Die Stationen werden durch die Zusammenschaltung mehrerer Komponenten 5, 7, 9, 11 aufgebaut und bilden zusammen eine E/A-Station. Die E/A-Station 2 enthält im wesentlichen eine Kopfstation 5 und mehrere weitere Einzelkomponenten 7, 9, 11. Die Verbindung zwischen den Einzelkomponenten bildet z. B. ein geeigneter Physical Layer mit einer Datenübertragungsrate von z. B. 1 Gbd. Dabei sind die Komponenten 5, 7, 9, 11 über einen Zweig 30 des Ethernet-Netzwerks ringförmig miteinander vernetzt.

Die Kopfstation 5 selbst enthält eine Master-Einrichtung 20, die den Busverkehr zu den nachfolgenden weiteren ersten Komponenten 7, 9, 11 steuert. Hierbei werden Standard Ethernet-MAC-Frames verwendet, Für eine effiziente Kommunikation zwischen den Einzelkomponenten mit zeitkritischen E/A-Daten kommt ein Summenrahmenprotokoll zum Einsatz, dass auf der Ethernet-Übertragungsschicht aufsetzt und so für einen effizienten Datenaustausch zwischen den Einzelkomponenten 5, 7, 9, 11 sorgt. Dementsprechend umfaßt die Anlage mehrere über ein Ethernet-Netzwerk miteinander verbundene Komponenten 5, 7, 9, 11. Die Komponenten 5, 7, 9, 11 weisen außerdem eine Einrichtung zum Auslesen des Summenrahmens aus dem Datenteil eines Ethernet MAC-Rahmens in Gestalt von Protokollchips, beziehungsweise integrierten Bausteinen 23 auf, wobei der integrierte Baustein 23 der Kopfstation 5 gleichzeitig als Master-Einrichtung 20 fungiert. Die Komponenten 5, 7, 9, 11 sind ansonsten entsprechend von üblichen Interbus-Komponenten aufgebaut und weisen dazu entsprechend noch eine nicht dargestellte Einrichtung zum Auslesen von für die Komponente bestimmten Daten aus einem Summenrahmen mittels eines Summenrahmen-Protokolls auf. Zumindest die Kopfstation 5, beziehungsweise deren als Master-Einrichtung 20 projektierter Protokollchip 23 sind außerdem zur Einbettung des Summenrahmens in den Datenteil des zu versendenden Ethernet-MAC-Rahmens ausgebildet.

Damit die integrierten Bausteine 23 der ersten Komponenten 5, 7, 9, 11 jeweils in der Lage sind, ein Telegramm mit einem derartigen Ethernet-MAC-Rahmen mit eingebettetem Summenrahmen von anderen, üblichen Ethernet-Telegrammen zu unterscheiden, wird eine Kennung in den Header des Ethernet-MAC-Rahmens eingefügt, die angibt, ob der Datenteil des Ethernet-MAC-Rahmens einen Summenrahmen enthält.

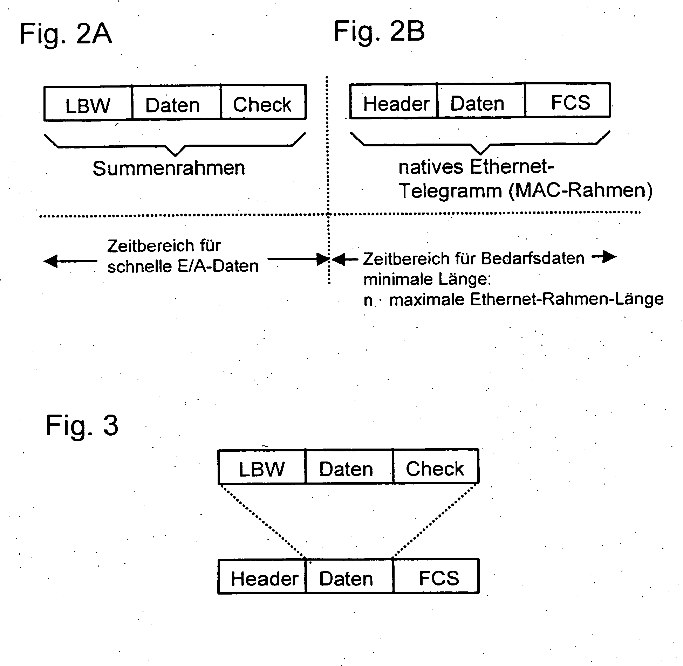

Eine oder mehrere der ersten Einzelkomponenten 5, 7, 9, 11 zur Verarbeitung von zeitkritischen E/A-Daten können beispielsweise über einen integrierten Ethernet-Switch 33 verfügen. Bei dem in Fig. 2 dargestellten Beispiel ist die Komponente 7 mit einem solchen Switch 33 ausgestattet. Der Switch 33 stellt Ports, beziehungsweise Anschlusspunkte 35 für den Anschluss von zweiten Komponenten 15, 16 zur Verfügung, welche zur Verarbeitung von für die Komponente bestimmten Daten aus einem Ethernet-MAC-Rahmen mittels eines von einem Summenrahmen-Protokoll verschiedenen Protokoll ausgebildet ist.

Bei dem in Fig. 1 gezeigten Beispiel sind die zweiten Komponenten 15, 16 Ethernet-Geräte. Die Komponente 7 koppelt direkt die verwendeten Ethernet-MAC-Frames aus und ein. Bei den anzuschließenden Geräten 15, 16 kann es sich z. B. um Geräte mit ProfiNet-Protokoll oder um andere Ethernet-Geräte mit einem anderen Protokoll handeln.

Ein weiterer Typ von Einzelkomponenten bietet z. B. speziell für ProfiNet-Geräte eine bereits integrierte Anschlussmöglichkeit an. Wie in Fig. 1 dargestellt, ist in diesem Beispiel die Komponente 11 derart austestattet. Sie verfügt über einen Anschluss 37 für einen Profinet-Teilnehmer 14. Eine weitere zweite Komponente 13, welche zur Verarbeitung von für die Komponente bestimmten Daten aus einem Ethernet-MAC-Rahmen mittels eines von einem Summenrahmen-Protokoll verschiedenen Protokoll ausgebildet ist, ist bei dem in Fig. 1 dargestellten Beispiel zwischen der speicherprogrammierbaren Steuerung 3 und der E/A-Station 2 angeschlossen. Auch diese Komponente kann beispielsweise ein ProfiNet-Teilnehmer sein.

Um die unterschiedlichen Anforderungen der Applikationen bedienen zu können, werden nach der erfindungsgemäßen Lehre zwei verschiedene Telegrammstrukturen verwendet.

Die Struktur der verschiedenen Rahmen, die zum Einsatz kommen, sind in den Fig. 2A, 2B und 3 dargestellt.

Die Daten für die Einzelkomponenten 7, 9, 11 mit zeitkritischen E/A-Daten befinden sich, wie im Interbus-System üblich, in einem einzigen Summenrahmen (Fig. 2A), der in die verwendeten Standard-Ethernet-MAC-Frames eingebettet wird. Dabei zeigt Fig. 2B den Aufbau eines Telegramms mit einem Standard-MAC-Rahmen.

Aufgrund der Anforderung, in einem gemeinsamen Netzwerk zwei verschiedene Protokolle übertragen zu können und hierfür einheitliche Ethernet-MAC-Frames zu verwenden, wird das Summenrahmentelegramm in den Datenbereich des Ethernet-Telegramms eingefügt (Fig. 3).

Das Summenrahmenprotokoll mit einem Summenrahmen gemäß Fig. 2A dient vorwiegend der Übertragung zeitkritischer Applikationsdaten z. B. von den Sensoren zur speicherprogrammierbaren Steuerung 3 bzw. von der speicherprogrammierbaren Steuerung 3 zu den Aktoren. Dieses Übertragungsprotokoll ist z. B. in der DE 4100629 beschrieben und wird vorwiegend in Interbus-Systemen benutzt. Das Protokoll hat sich in der Vergangenheit insbesondere bei schnellen Datenübertragungen bewährt.

Geeignete Summenrahmen-Protokolle sind weiterhin auch aus IEC 61158 und IEC 61784 bekannt.

Das erfindungsgemäße Verfahren nutzt die Vorteile des Summenrahmenprotokolls, in dem es die zeitkritischen E/A-Daten aller Einzelkomponenten 5, 7, 9, 11 enthält und mit einem einzigen Telegramm mit geringem Overhead überträgt. Das Summenrahmentelegramm wird wie in Fig. 3 dargestellt, in den Ethernet-MAC-Frame eingebettet und unter Verwendung einer geeigneten physikalischen Schicht übertragen.

Von und zu Ethernet-Geräten, wie etwa den Komponenten 13-16 werden in der Regel größere Datenmengen übertragen. Außerdem müssen die Geräte aus Kompatibilitätsgründen über ein ausgewähltes Ethernet-Protokoll wie z. B. ProfiNet miteinander kommunizieren können. Hier kommen Standard-Ethernet-Frames zur Anwendung.

Üblicherweise sollen die zeitkritischen E/A-Daten zyklisch übertragen werden, um z. B. Regelungen, die ein festes Abtastraster benötigen, zu ermöglichen. Die Daten der ProfiNet-Teilnehmer sollen die Übertragung der E/A-Daten möglichst nicht oder nur wenig beeinflussen. Außerdem sind die Anforde-rungen an eine äquidistante Abtastung nicht so groß wie bei den zeitkritischen E/A-Daten.

Zur Unterscheidung, ob sich im Datenfeld des Ethernet-MAC-Frames nun ein Summenrahmentelegramm gemäß Fig. 3 oder ein Standard-Ethernet-Telegramm befindet, erfolgt beim Einlaufen des Telegramms in die Einzelkomponenten eine Auswertung des Telegrammtyps. Es werden über eine festgelegte Kennung im Header des Ethernet-MAC-Frames verschiedene Telegrammtypen festgelegt. Vorzugsweise kommen mindestens drei Telegrammtypen zur Anwendung:
1. Telegramme mit Summenrahmen
2. Telegramme ohne Summenrahmen (Ethernet, ProfiNet, ...)
3. Telegramme ohne Summenrahmen für eine der ersten Komponenten 5, 7, 9, 11 als empfangenen Teilnehmer

Bei der Kennung 1 enthält der Datenbereich des Ethernet-MAC-Frames die zeitkritischen E/A-Daten aller betroffenen angeschlossenen Einzelkomponenten in Form eines Summenrahmentelegramms. Die Bits der Einzelkomponenten werden wie im Interbus direkt hintereinander übertragen. Die Übertragung der Daten erfolgt mit Ausnahme der verwendeten MAC-Rahmen und physikalischen Schichten in gleicher Art und Weise wie im an sich bekannten Interbus-System.

Bei Kennung 2 und 3 erkennt der Teilnehmer, dass es sich um ein reines Ethernet-Telegramm (z. B. Profinet) handelt.

Das Telegramm wird nur von den Typ 2- oder 3-Teilnehmern ausgewertet und um die ersten Einzelkomponenten mit ausschließlich zeitkritischen E/A-Daten herum geleitet.

Um dies zu bewerkstelligen, weisen die ersten Komponenten 5, 7, 9, 11 eine Schaltereinrichtung auf, welche unter Ansprechen darauf, daß die Kennung das Fehlen von Summenrahmen-Daten im Ethernet-MAC-Rahmen anzeigt, die Daten an der Einrichtung zum Auslesen von für die Komponente bestimmten Daten aus dem Summenrahmen vorbeileitet.

Dazu zeigt Fig. 4 den Aufbau einer als Ganzes mit dem Bezugszeichen 6 bezeichneten ersten Komponente, wie sie als eine der Komponenten 7, 9, 11 bei dem in Fig. 1 dargestellten System eingesetzt werden kann.

Für das Vorbeileiten an der Einrichtung 48 zum Auslesen kommt eine Schalteinrichtung 44 im Datenpfad zum Einsatz. An den Eingang 40 der ersten Komponente 6 ist dazu eine Auswerteschaltung 42 angeschlossen, welche die möglichen Kennungen im Header des eingehenden Ethernet-MAC-Rahmens auswertet. Wird eine Kennung festgestellt, welche das Vorhandensein von Summenrahmen-Daten im Ethernet-MAC-Rahmen anzeigt, so wird im Ansprechen darauf die Schalteinrichtung 44 so eingestellt, daß die Summenrahmen-Daten einer Einrichtung 48 zum Auslesen von für die Komponente bestimmten Daten aus dem Summenrahmen zuführt. Läuft also in die Einzelkomponente 6 der Header eines Ethernet-MAC-Frames ein, so erkennt eine Auswerteschaltung, ob es sich im Datenbereich um ein Summenrahmenprotokoll handelt oder nicht.

Diese Einrichtung 48 weist, wie in Interbus-Komponenten üblich, ein Schieberegister 52 auf. Handelt es sich um ein Summenrahmenprotokoll, so werden die Daten des Datenbereichs wie im Interbus-System bearbeitet. Die betroffenen Einzelkomponenten erhalten direkt hintereinander die Datenbits der zeitkritischen E/A-Daten und übernehmen dieselben nach Beendigung des Summenrahmens und einer Aktivierung der Master-Einrichtung in der Kopfstation. Gleichzeitig werden auch neue Daten zur Übertragung bereitgestellt und im nächsten Zyklus übertragen.

Insbesondere weist die Einrichtung 48 der ersten Komponenten einen Umschalter 54 auf. Mit dem Umschalter 54 werden die Schieberegister 52 der ersten Komponenten 6 überbrückt. Wird das Schieberegister 52 überbrückt, wird mit dem Umschalter 54 außerdem eine Erkenungsschaltung 55 an die Übertragungsleitung angeschaltet, welche ein Steuersignal erkennt, wobei unter Ansprechen auf das Steuersignal eine Datensicherung von der Komponente vorgenommen wird. Auf diese Weise wird eine gleichzeitige Datensicherung in mehreren derartig ausgebildeten Komponenten 6 erreicht, da das Steuersignal von allen Auswerteschaltungen 55 der Komponenten gleichzeitig erkannt wird.

In einer weiteren Schalterstellung werden die ankommenden Telegramme auf der betreffenden Einzelkomponente 6 einer Auswerteeinrichtung 46 zugeführt und ausgewertet. Beispielsweise können auf diese Weise Parametrierungsdaten der ersten Komponente 6 zugeführt werden.

Handelt es sich um einen reinen Ethernet-Frame, so wird dieser Rahmen in einer weiteren Schalterstellung entlang des Pfads 50 um Verarbeitungs-Einrichtungen der Teilnehmer mit insbesondere zeitkritischen E/A-Daten, wie etwa der ersten Komponenten 6 herum direkt zum Ausgang 41 geleitet. Dementsprechend werden dabei mit der Schaltereinrichtung 44 unter Ansprechen darauf, daß die Kennung das Fehlen von Summenrahmen-Daten im Ethernet-MAC-Rahmen anzeigt, die Daten an der Einrichtung 48 zum Auslesen von für die Komponente 6 bestimmten Daten aus dem Summenrahmen vorbeigeleitet.

In der Phase, in der der Schalter die Einzelkomponenten mit reinen zeitkritschen E/A-Daten überbrückt, werden somit nur noch die Einzelkomponenten angesprochen, die vom Typ 2 oder 3 sind, wodurch der Datenverkehr deutlich reduziert wird.

Ferner ist erfindungsgemäß vorgesehen, dass eine z. B. zeitliche Aufteilung der Telegrammtypen erfolgt. Die Länge des Summenrahmens und die für seine Übertragung benötigte Zeit ist berechenbar und konstant. Nachdem der Summenrahmen übertragen worden ist, schließt sich die Übertragung der Ethernet-Telegramme an. Hierfür kann der Anwender in der Kopfstation 5 per Parametrierung einen Zeitrahmen vorsehen, der mindestens so groß ist, wie diejenige Zeit, die für die Übertragung des größten möglichen Ethernet-Telegramms benötigt wird.

Da die Übertragungsrate innerhalb der Station wesentlich höher sein kann, als diejenige zwischen der SPS 3 und der Kopfstation 5, kann unter zeitlichen Aspekten auch ein ganzzahliges Vielfaches n der Zeit, die für die Übertragung eines maximal großen Ethernet-Telegramms benötigt wird, eingestellt werden, wenn ausreichend Systemreserve zur Verfügung steht. Bei dieser Weiterbildung der Erfindung sind die Komponenten der Anlage 1 dementsprechend so parametriert, daß die Übertragung von Telegrammen mit im Ethernet-MAC-Rahmen enthaltenem Summenrahmen und anderen Telegrammen in aufeinanderfolgenden Zeitschlitzen vorgegebener Länge erfolgt.

Wollen die angeschlossenen Ethernet-Geräte ihrerseits Daten versenden, so können sie das nicht zu jedem beliebigen Zeitpunkt, wenn Kollisionen vermieden werden sollen, da das Ende des Summenrahmens abzuwarten ist. Hierfür ist in den Einzelkomponenten 7 und 11 bei dem in Fig. 1 gezeigten Beispiel ein Zwischenspeicher 25 vorgesehen, welcher zu versendende Daten sammelt, wobei die Komponenten 7, 11 eingerichtet sind, die gesammelten Daten nach Übertragung des Telegramms, welches den Summenrahmen enthält, zu übertragen. Insbesondere kann der Zwischenspeicher 25 dazu nicht nur die Daten, sondern bereits die zu versendenden Ethernet-Telegramme sammeln und zwischenspeichern.

Gemäß noch einer Weiterbildung der Erfindung können die ersten Komponenten 5, 7, 9, 11 als Repeater für Telegramme ausgebildet sein, welche keine Summenrahmen-Daten enthalten. Dann arbeiten im Falle der Summenrahmenübertragung die Einzelkomponenten 5, 7, 9, 11 wie im bekannten Interbus-System, wirken im Falle der Übertragung von sonstigen, nicht für die Komponenten selbst bestimmten Ethernet-Telegrammen aber als Repeater. In beiden Fällen wird der standardisierte Layer 2 von Ethernet benutzt. Der zweite Schalter dient der schnellen Weiterleitung von Ethernet-Telegrammen in der Phase, die sich der Übertragung des Summenrahmens anschließt. Auf diese Weise gelangen die Ethernet-Telegramme zur Auswertung nur an die Einzelkomponenten des Typs 2 und 3.

Ferner kann das System so parametriert werden, dass sich nach der Übertragung eines Summenrahmentelegramms ein oder mehrere Ethernet-Telegramme anschließen oder eine Übertragung der Ethernet-Telegramme z. B. nur nach jedem x-ten Summenrahmentelegramm erfolgt. Dementsprechend sind bei dieser Ausführungsform der Erfindung daß die Komponenten so parametriert, daß eine vorgegebene Reihenfolge von Telegrammen mit im Ethernet-MAC-Rahmen eingebetteten Summenrahmen und anderen Telegrammen eingehalten wird.

Um eine schnelle, fehlersichere Datenübertragung zwischen den ersten Komponenten 5, 7, 9, 11 zu erreichen, können diese Einzelkomponenten direkt hintereinander montiert werden. Es ist aber auch möglich, zwischen zwei Einzelkomponenten eine Datenübertragung vorzusehen, die eine größere Entfernung überbrücken kann. Zwischen den Einzelkomponenten wird besonders bevorzugt außerdem eine reine Punkt zu Punkt-Übertragung eingehalten. Daher sollten andere Ethernet-Teilnehmer, wie etwa zweite Komponenten 13 - 16 zwischen den auf diese Weise verbundenen ersten Einzelkomponenten 5, 7, 9, 11 nicht direkt angeschlossen werden.

Abschließend sei erwähnt, dass das Verfahren auch für die Übertragung von sicherheitsrelevanten Daten geeignet ist. Das kann im Falle der Übertragung eines Summenrahmentelegramms das Interbus-Safety-Protokoll oder aber auch, im Falle der Verwendung von ProfiNet-Teilnehmern, das Profisafe-Protokoll sein.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden.

## Patentansprüche

1. Anlage (1) mit mehreren über ein Ethernet-Netzwerk miteinander verbundenen Komponenten (5, 7, 9, 11) wobei zumindest eine erste der Komponenten (5, 7, 9, 11) eine Einrichtung zum Auslesen von für die Komponente bestimmten Daten aus einem Summenrahmen mittels eines Summenrahmen-Protokolls, sowie eine Einrichtung zum Auslesen des Summenrahmens aus dem Datenteil eines Ethernet MAC-Rahmens aufweist, wobei zumindest eine der Komponenten (5, 7, 9, 11) der Anlage (1) eine Einrichtung zur Einbettung des Summenrahmens in den Datenteil eines Ethernet-MAC-Rahmens und eine Einrichtung zur Übertragung des Ethernet-MAC-Rahmens über das Ethernet-Netzwerk aufweist, wobei zumindest eine der Komponenten (5, 7, 9, 11) eine Einrichtung zur Einfügung einer Kennung in den Ethernet-MAC-Rahmen aufweist, die angibt, ob der Datenteil des Ethernet-MAC-Rahmens einen Summenrahmen enthält, und wobei mehrere erste Komponenten (5, 7, 9, 11) mit dem Ethernet-Netzwerk verbunden sind, wobei die Komponenten einen Umschalter (54) aufweisen, mit dem deren Schieberegister (52) überbrückt und eine Erkennungsschaltung (55) an die Übertragungsleitung angeschaltet werden kann, welche ein Steuersignal erkennt, **dadurch gekennzeichnet, daß** unter Ansprechen auf das Steuersignal eine gleichzeitige Datensicherung von den ersten Komponenten (5, 7, 9, 11) vorgenommen wird.

2. Anlage gemäß Anspruch 1, **gekennzeichnet durch** eine Kopfstation (5) mit einer Master-Einheit (20) zur Steuerung des Busverkehrs mit der zumindest einen Komponente (6), welche eine Einrichtung zum Auslesen von für die Komponente (6) bestimmten Daten aus einem Summenrahmen mittels eines Summenrahmen-Protokolls aufweist.

3. Anlage gemäß einem der vorstehenden Ansprüche, **dadurch gekennzeichnet, daß** die Einrichtung zur Einbettung des Summenrahmens in den Datenteil einen Ethernet-MAC-Rahmens zur Einbettung eines gemeinsamen Summenrahmens für mehrere, insbesondere alle Komponenten (5, 7, 9, 11) mit einer Einrichtung zum Auslesen von für die Komponente bestimmten Daten aus einem Summenrahmen mittels eines Summenrahmen-Protokolls ausgebildet ist.

4. Anlage gemäß einem der vorstehenden Ansprüche, **gekennzeichnet durch** zumindest eine zum Einfügen von Daten in den Summenrahmen, in Ansprechen auf das Feststellen, daß die Kennung vorhanden ist, eingerichtete Komponente.

5. Anlage gemäß einem der vorstehenden Ansprüche, **dadurch gekennzeichnet, daß** die Einrichtung zur Einfügung einer Kennung in den Ethernet-MAC-Rahmen zur Einfügung der Kennung in den Header des Ethernet-MAC-Rahmens ausgebildet ist.

6. Anlage gemäß einem der vorstehenden Ansprüche, **dadurch gekennzeichnet, daß** die zumindest eine erste Komponente eine Schaltereinrichtung (44) aufweist, welche unter Ansprechen darauf, daß die Kennung das Vorhandensein von Summenrahmen-Daten im Ethernet-MAC-Rahmen anzeigt, die Summenrahmen-Daten der Einrichtung zum Auslesen von für die Komponente (5, 7, 9, 11) bestimmten Daten aus dem Summenrahmen zuführt.

7. Anlage gemäß Anspruch 6, **dadurch gekennzeichnet, daß** die Schaltereinrichtung (44) unter Ansprechen darauf, daß die Kennung das Fehlen von Summenrahmen-Daten im Ethernet-MAC-Rahmen anzeigt, die Daten an der Einrichtung zum Auslesen von für die Komponente (5, 7, 9, 11) bestimmten Daten aus dem Summenrahmen vorbeileitet.

8. Anlage gemäß Anspruch 6 oder 7, **dadurch gekennzeichnet, daß** die Schaltereinrichtung (44) ausgebildet ist, unter Ansprechen darauf, daß die Kennung das Fehlen von Summenrahmen-Daten im Ethernet-MAC-Rahmen, jedoch die Bestimmung der Rahmendaten für diese Komponenten (5, 7, 9, 11) anzeigt, die Daten einer weiteren internen Verarbeitungseinrichtung der ersten Komponente (5, 7, 9, 11) zuzuführen.

9. Anlage gemäß einem der vorstehenden Ansprüche, **gekennzeichnet durch** zumindest eine zweite über das Ethernet-Netzwerk angeschlossene Komponente (11, 15, 16), welche zur Verarbeitung von für die Komponente bestimmten Daten aus einem Ethernet-MAC-Rahmen mittels eines von einem Summenrahmen-Protokoll verschiedenen Protokoll ausgebildet ist.

10. Anlage gemäß Anspruch 9, **gekennzeichnet durch** zumindest eine zweite Komponente (11) eingerichtet zur Verarbeitung von Daten nach dem ProfiNet-Protokoll.

11. Anlage gemäß einem der vorstehenden Ansprüche, **dadurch gekennzeichnet, daß** zumindest eine erste Komponente (5, 7, 9, 11) als Repeater für Telegramme ausgebildet ist, welche keine Summenrahmen-Daten enthalten.

12. Anlage gemäß einem der vorstehenden Ansprüche, **dadurch gekennzeichnet, daß** die Komponenten so parametriert sind, daß die Übertragung von Telegrammen mit im Ethernet-MAC-Rahmen enthaltenem Summenrahmen und anderen Telegrammen in aufeinanderfolgenden Zeitschlitzen vorgegebener Länge erfolgt.

13. Anlage gemäß einem der vorstehenden Ansprüche, **dadurch gekennzeichnet, daß** die Komponenten so parametriert sind, daß eine vorgegebene Reihenfolge von Telegrammen mit im Ethernet-MAC-Rahmen eingebetteten Summenrahmen und anderen Telegrammen eingehalten wird.

14. Anlage nach einem der vorstehenden Ansprüche, **dadurch gekennzeichnet, daß** die Anlage eine automatisierte Fertigungsanlage umfaßt.

15. Anlage gemäß einem der vorstehenden Ansprüche, **dadurch gekennzeichnet, daß** zumindest eine erste Komponente (5, 7, 9, 11) einen Zwischenspeicher (25) aufweist, welcher zu versendende Daten sammelt, wobei die Komponente eingerichtet ist, die gesammelten Daten nach Übertragung des Telegramms mit dem Summenrahmen zu übertragen.

16. Anlage gemäß einem der vorstehenden Ansprüche, **dadurch gekennzeichnet, daß** mehrere erste Komponenten (5, 7, 9, 11) ringförmig miteinander vernetzt sind.

17. Anlage gemäß einem der vorstehenden Ansprüche, **dadurch gekennzeichnet, daß** die Anlage zumindest eine E/A-Station (2) mit mehreren ersten Komponenten (5, 7, 9, 11) umfaßt, wobei Daten zu den ersten Komponenten 5, 7, 9, 11) der E/A-Station (2) in Telegrammen mit jeweils einem Summenrahmen übertragen werden, welcher die Daten eines Buszyklus für die ersten Komponenten 5, 7, 9, 11) enthält.

18. Anlage gemäß einem der vorstehenden Ansprüche, **dadurch gekennzeichnet, daß** mehrere erste Komponenten (5, 7, 9, 11) zu einer E/A-Station (2) zusammengefaßt sind, welche von einer speicherprogrammierbaren Steuerung gesteuert wird.

19. Verfahren zur Datenübertragung in einer Anlage (1) mit mehreren über ein Ethernet-Netzwerk miteinander verbundenen Komponenten (5, 7, 9, 11), insbesondere in einer Anlage (1) gemäß einem der vorstehenden Ansprüche, insbesondere zur Steuerung eines automatisierten Fertigungsprozesses, wobei ein Summenrahmen erzeugt, der Summenrahmen in den Datenteil eines Ethernet-MAC-Rahmens eingebettet und eine Kennung eingefügt wird, wobei der Ethernet-MAC-Rahmen einen Summenrahmen zur Verarbeitung gemäß eines Feldbus-Protokolls enthält, wobei der Ethernet-MAC-Rahmen dann als Telegramm über das Ethernet-Netzwerk übertragen und von zumindest einer ersten Komponente (5, 7, 9, 11), die zur Verarbeitung von Daten nach einem Feldbus-Protokoll ausgebildet ist, in Ansprechen auf das Feststellen, daß die Kennung vorhanden ist, für sie bestimmte Daten aus einem Summenrahmen nach einem Summenrahmen-Protokoll aus dem Summenrahmen im Ethernet-MAC-Rahmen ausliest, wobei mehrere erste Komponenten (6) mit dem Ethernet-Netzwerk verbunden sind, und wobei die Komponenten (6) einen Umschalter (54) aufweisen, mit dem deren Schieberegister (52) überbrückt und eine Erkennungsschaltung (55) an die Übertragungsleitung angeschaltet wird, **dadurch gekennzeichnet, daß** unter Ansprechen auf ein von der Erkennungsschaltung (52) erkanntes Steuersignal nach einer Übertragung eines Telegramms mit im Ethernet-MAC-Rahmen enthaltenem Summenrahmen eine gleichzeitige Datensicherung von mehreren ersten Komponenten (5, 7, 9, 11) vorgenommen wird.

20. Verfahren gemäß Anspruch 19, **dadurch gekennzeichnet, daß** der Busverkehr mit der zumindest einen Komponente die zur Verarbeitung von Daten nach einem Feldbus-Protokoll ausgebildet ist, durch eine Master-Einheit (20) einer Kopfstation (5) gesteuert wird.

21. Verfahren gemäß Anspruch 20, **dadurch gekennzeichnet, daß** in der Kopfstation mit der Master-Einheit ein Summenrahmen mit Steuerungsdaten erzeugt, in den Datenteil eines Ethernet-MAC-Rahmens eingebettet und der Ethernet-MAC-Rahmen an zumindest eine Komponente (5, 7, 9, 11), die zur Verarbeitung von Daten nach einem Feldbus-Protokoll ausgebildet ist, über das Ethernet-Netzwerk übertragen wird.

22. Verfahren gemäß einem der vorstehenden Ansprüche 19 bis 21, **dadurch gekennzeichnet, daß** mehrere, bevorzugt alle Komponenten (5, 7, 9, 11) mit einer Einrichtung zum Auslesen von für die Komponente bestimmten Daten aus einem Summenrahmen mittels eines Summenrahmen-Protokolls über Daten in einem gemeinsamen Summenrahmen gesteuert werden.

23. Verfahren gemäß einem der vorstehenden Ansprüche 19 bis 22, **dadurch gekennzeichnet, daß** von zumindest einer Komponente (5, 7, 9, 11), die zur Verarbeitung von Daten nach einem Feldbus-Protokoll ausgebildet ist, in Ansprechen auf das Feststellen, daß die Kennung vorhanden ist, für eine weitere Komponente bestimmte Daten in den Summenrahmen im Ethernet-MAC-Rahmen einfügt.

24. Verfahren gemäß einem der vorstehenden Ansprüche 19 bis 23, **dadurch gekennzeichnet, daß** die Kennung in den Header des Ethernet-MAC-Rahmens eingefügt wird.

25. Verfahren gemäß einem der vorstehenden Ansprüche 19 bis 24, **dadurch gekennzeichnet, daß** eine Schaltereinrichtung (44) der ersten Komponente unter Ansprechen darauf, daß die Kennung das Vorhandensein von Summenrahmen-Daten im Ethernet-MAC-Rahmen anzeigt, die Summenrahmen-Daten einer Einrichtung zum Auslesen von für die Komponente bestimmten Daten aus dem Summenrahmen zuführt.

26. Verfahren gemäß Anspruch 25, **dadurch gekennzeichnet, daß** die Schaltereinrichtung (44) unter Ansprechen darauf, daß die Kennung das Fehlen von Summenrahmen-Daten im Ethernet-MAC-Rahmen anzeigt, die Daten an der Einrichtung zum Auslesen von für die Komponente (5, 7, 9, 11) bestimmten Daten aus dem Summenrahmen vorbeileitet.

27. Verfahren gemäß Anspruch 25 oder 26, **dadurch gekennzeichnet, daß** die Schaltereinrichtung (44) unter Ansprechen darauf, daß die Kennung das Fehlen von Summenrahmen-Daten im Ethernet-MAC-Rahmen, jedoch die Bestimmung der Rahmendaten für diese Komponente anzeigt, die Daten einer weiteren internen Verarbeitungseinrichtung der ersten Komponente (5, 7, 9 , 11) zuführt.

28. Verfahren gemäß einem der vorstehenden Ansprüche 19 bis 27, **dadurch gekennzeichnet, daß** die Übertragung von Telegrammen mit im Ethernet-MAC-Rahmen enthaltenem Summenrahmen und anderen Telegrammen in aufeinanderfolgenden Zeitschlitzen vorgegebener Länge erfolgt.

29. Verfahren gemäß einem der vorstehenden Ansprüche 19 bis 28, **dadurch gekennzeichnet, daß** eine vorgegebene Reihenfolge von Telegrammen mit im Ethernet-MAC-Rahmen eingebetteten Summenrahmen und anderen Telegrammen eingehalten wird.

30. Verfahren gemäß einem der vorstehenden Ansprüche 19 bis 29, **dadurch gekennzeichnet, daß** von einer ersten Komponente zu versendende Daten in einem Zwischenspeicher (25) gesammelt und nach Übertragung des Telegramms mit dem Summenrahmen übertragen werden.

## Claims

1. Installation (1) having a plurality of components (5, 7, 9, 11) which are connected to each other via an Ethernet network, wherein at least a first of the components (5, 7, 9, 11) comprises a device for reading out data, which are intended for the component, from a sum frame by means of a sum frame protocol, and a device for reading out the sum frame from the data part of an Ethernet MAC frame, wherein at least one of the components (5, 7, 9, 11) of the installation (1) comprises a device for embedding the sum frame into the data part of an Ethernet MAC frame, and a device for transmitting the Ethernet MAC frame via the Ethernet network, wherein at least one of the components (5, 7, 9, 11) comprises a device for inserting an identifier into the Ethernet MAC frame, which identifier indicates whether the data part of the Ethernet MAC frame contains a sum frame, and wherein a plurality of first components (5, 7, 9, 11) are connected to the Ethernet network, wherein the components comprise a change-over switch (54), by means of which their shift register (52) can be bridged and an identification circuit (55) can be connected to the transmission line and identifies a control signal, **characterised in that** in response to the control signal, simultaneous data back-up is performed by the first components (5, 7, 9, 11).

2. Installation as claimed in claim 1, **characterised by** a head station (5) having a master unit (20) for controlling the bus traffic with the at least one component (6) which comprises a device for reading out data, which are intended for the component (6), from a sum frame by means of a sum frame protocol.

3. Installation as claimed in any one of the preceding claims, **characterised in that** the device for embedding the sum frame into the data part of an Ethernet MAC frame is designed for embedding a common sum frame for a plurality of components, in particular all of the components (5, 7, 9, 11), with a device for reading out data, which are intended for the component, from a sum frame by means of a sum frame protocol.

4. Installation as claimed in any one of the preceding claims, **characterised by** at least one component which is arranged for inserting data into the sum frame in response to establishing that the identifier is present.

5. Installation as claimed in any one of the preceding claims, **characterised in that** the device for inserting an identifier into the Ethernet MAC frame is designed for inserting the identifier into the header of the Ethernet MAC frame.

6. Installation as claimed in any one of the preceding claims, **characterised in that** the at least one first component comprises a switch device (44) which, in response to the identifier indicating the presence of sum frame data in the Ethernet MAC frame, supplies the sum frame data to the device for reading out data, which are intended for the component (5, 7, 9, 11), from the sum frame.

7. Installation as claimed in claim 6, **characterised in that**, in response to the identifier indicating the absence of sum frame data in the Ethernet MAC frame, the switch device (44) directs the data past the device for reading out data, which are intended for the component (5, 7, 9, 11), from the sum frame.

8. Installation as claimed in claim 6 or 7, **characterised in that**, in response to the identifier indicating the absence of sum frame data in the Ethernet MAC frame but indicating the determination of the frame data for these components (5, 7, 9, 11), the switch device (44) is designed for supplying the data to a further internal processing device of the first component (5, 7, 9, 11).

9. Installation as claimed in any one of the preceding claims, **characterised by** at least one second component (11, 15, 16) which is connected via the Ethernet network and is designed for processing data, which are intended for the component, from an Ethernet MAC frame by means of a protocol which is different from a sum frame protocol.

10. Installation as claimed in claim 9, **characterised by** at least one second component (11) arranged for processing data in accordance with the ProfiNet protocol.

11. Installation as claimed in any one of the preceding claims, **characterised in that** at least one first component (5, 7, 9, 11) is designed as a repeater for messages which do not contain any sum frame data.

12. Installation as claimed in any one of the preceding claims, **characterised in that** the components are parameterised such that messages are transmitted with a sum frame contained in the Ethernet MAC frame and other messages are transmitted in successive time slots of a specified length.

13. Installation as claimed in any one of the preceding claims, **characterised in that** the components are parameterised such that a specified sequence of messages with sum frames embedded in the Ethernet MAC frame and other messages is observed.

14. Installation as claimed in any one of the preceding claims, **characterised in that** the installation comprises an automated manufacturing installation.

15. Installation as claimed in any one of the preceding claims, **characterised in that** at least one first component (5, 7, 9, 11) comprises a buffer store (25) which collects data to be transmitted, wherein the component is arranged to transmit the collected data after transmission of the message with the sum frame.

16. Installation as claimed in any one of the preceding claims, **characterised in that** a plurality of first components (5, 7, 9, 11) are networked with each other in the form of a ring.

17. Installation as claimed in any one of the preceding claims, **characterised in that** the installation comprises at least one I/O station (2) with a plurality of first components (5, 7, 9, 11), wherein data are transmitted to the first components (5, 7, 9, 11) of the I/O station (2) in messages having in each case one sum frame which contains the data of a bus cycle for the first components (5, 7, 9, 11).

18. Installation as claimed in any one of the preceding claims, **characterised in that** a plurality of first components (5, 7, 9, 11) are combined to form an I/O station (2) which is controlled by a controller which is programmable from memory.

19. Method of data transmission in an installation (1) having a plurality of components (5, 7, 9, 11) which are connected to each other via an Ethernet network, in particular in an installation (1) as claimed in any one of the preceding claims, in particular for controlling an automated manufacturing process, wherein a sum frame is produced, the sum frame is embedded into the data part of an Ethernet MAC frame and an identifier is inserted, wherein the Ethernet MAC frame contains a sum frame for processing in accordance with a field bus protocol, wherein the Ethernet MAC frame is then transmitted as a message via the Ethernet network, and data from a sum frame which are intended for at least one first component (5, 7, 9, 11) which is designed for processing data in accordance with a field bus protocol, are read out by at least one first component in accordance with a sum frame protocol from the sum frame in the Ethernet MAC frame component in response to establishing that the identifier is present, wherein a plurality of first components (6) are connected to the Ethernet network and wherein the components (6) comprise a change-over switch (54), by means of which their shift register (52) can be bridged and an identification circuit (55) is connected to the transmission line, **characterised in that**, in response to a control signal which is identified by the identification circuit (52), simultaneous data back-up is performed by a plurality of first components (5, 7, 9, 11) after transmission of a message with a sum frame contained in the Ethernet MAC frame.

20. Method as claimed in claim 19, **characterised in that** the bus traffic with the at least one component which is designed for processing data in accordance with a field bus protocol is controlled by a master unit (20) of a head station (5).

21. Method as claimed in claim 20, **characterised in that** a sum frame with control data is produced in the head station with the master unit, is embedded into the data part of an Ethernet MAC frame, and the Ethernet MAC frame is transmitted via the Ethernet network to at least one component (5, 7, 9, 11) which is designed for processing data in accordance with a field bus protocol.

22. Method as claimed in any one of the preceding claims 19 to 21, **characterised in that** a plurality, preferably all, of the components (5, 7, 9, 11) are controlled by a device for reading out data, which are intended for the component, from a sum frame by means of a sum frame protocol via data in a common sum frame.

23. Method as claimed in any one of the preceding claims 19 to 22, **characterised in that** data, which are intended for a further component, are inserted into the sum frame in the Ethernet MAC frame by at least one component (5, 7, 9, 11), which is designed for processing data in accordance with a field bus protocol, in response to establishing that the identifier is present.

24. Method as claimed in any one of the preceding claims 19 to 23, **characterised in that** the identifier is inserted into the header of the Ethernet MAC frame.

25. Method as claimed in any one of the preceding claims 19 to 24, **characterised in that**, in response to the identifier indicating the presence of sum frame data in the Ethernet MAC frame, a switch device (44) of the first component supplies the sum frame data to a device for reading out data, which are intended for the component, from the sum frame.

26. Method as claimed in claim 25, **characterised in that**, in response to the identifier indicating the absence of sum frame data in the Ethernet MAC frame, the switch device (44) directs the data past the device for reading out data, which are intended for the component (5, 7, 9, 11), from the sum frame.

27. Method as claimed in claim 25 or 26, **characterised in that**, in response to the identifier indicating the absence of sum frame data in the Ethernet MAC frame but indicating the determination of the frame data for this component, the switch device (44) supplies the data to a further internal processing device of the first component (5, 7, 9, 11).

28. Method as claimed in any one of the preceding claims 19 to 27, **characterised in that** messages with a sum frame which is contained in the Ethernet MAC frame and other messages are transmitted in successive time slots of a specified length.

29. Method as claimed in any one of the preceding claims 19 to 28, **characterised in that** a specified sequence of messages with sum frames which are embedded in the Ethernet MAC frame and other messages is observed.

30. Method as claimed in any one of the preceding claims 19 to 29, **characterised in that** data to be transmitted by a first component are collected in a buffer store (25) and are transmitted after transmission of the message with the sum frame.

## Revendications

1. Installation (1) comprenant plusieurs composants (5, 7, 9, 11) reliés les uns aux autres par un réseau Ethernet, au moins un premier des composants (5, 7, 9, 11) présentent un dispositif pour l'extraction de données destinées au composant d'une trame globale au moyen d'un protocole de trame globale, et un dispositif pour l'extraction de la trame globale de la partie de données d'une trame Ethernet-MAC, au moins l'un des composants (5, 7, 9, 11) de l'installation (1) présentant un dispositif pour l'intégration de la trame globale dans la partie de données d'une trame Ethernet-MAC et un dispositif pour la transmission de la trame Ethernet-MAC par le réseau Ethernet, au moins l'un des composants (5, 7, 9, 11) présentant un dispositif pour l'insertion d'un code d'identification dans la trame Ethernet-MAC, qui indique si la partie de données de la trame Ethernet-MAC contient une trame globale, plusieurs premiers composants (5, 7, 9, 11) étant reliés au réseau Ethernet, les composants présentant un commutateur inverseur (54) qui permet de court-circuiter leurs registres à décalage (52) et de raccorder un circuit de reconnaissance (55) à la ligne de transmission, qui reconnaît un signal de commande, **caractérisée en ce qu'**une sauvegarde de données simultanée est effectuée par les premiers composants (5, 7, 9, 11) en réaction au signal de commande.

2. Installation selon la revendication 1, **caractérisée par** une station tête de ligne (5) dotée d'une unité maître (20) pour la commande du trafic de bus avec le, au moins un, composant (6), lequel présente un dispositif pour l'extraction de données destinées au composant (6) d'une trame globale au moyen d'un protocole de commande globale.

3. Installation selon l'une quelconque des revendications précédentes, **caractérisée en ce que** le dispositif pour l'intégration de la trame globale dans la partie de données d'une trame Ethernet-MAC est conçu pour l'intégration d'une trame globale commune pour plusieurs, en particulier tous les, composants (5, 7, 9, 11) avec un dispositif pour l'extraction de données destinées au composant d'une trame globale au moyen d'un protocole de trame globale.

4. Installation selon l'une quelconque des revendications précédentes, **caractérisée par** au moins un composant agencé pour l'insertion de données dans la trame globale, en réaction à la constatation que le code d'identification est présent.

5. Installation selon l'une quelconque des revendications précédentes, **caractérisée en ce que** le dispositif pour l'insertion d'un code d'identification dans la trame Ethernet-MAC est conçu pour l'insertion du code d'identification dans l'en-tête de la trame Ethernet-MAC.

6. Installation selon l'une quelconque des revendications précédentes, **caractérisée en ce que** le, au moins un, premier composant présente un dispositif commutateur (44) qui, en réaction au fait que le code d'identification indique la présence de données de trame globale dans la trame Ethernet-MAC, amène les données de la trame globale au dispositif pour l'extraction de données destinées au composant (5, 7, 9, 11) de la trame globale.

7. Installation selon la revendication 6, **caractérisé en ce que**, en réaction au fait que le code d'identification indique l'absence de données de trame globale dans la trame Ethernet-MAC, le dispositif commutateur (44) achemine les données en les faisant passer devant le dispositif pour l'extraction de données destinées aux composants (5, 7,9, 11) de la trame globale.

8. Installation selon la revendication 6 ou 7, **caractérisée en ce que** le dispositif commutateur (44) est conçu pour amener les données à un autre dispositif de traitement interne du premier composant (5, 7, 9, 11) en réaction à ce que le code d'identification indique l'absence de données de trame globale dans la trame Ethernet-MAC, mais la destination des données de trame pour ces composants (5, 7, 9, 11).

9. Installation selon l'une quelconque des revendications précédentes, **caractérisée par** au moins un second composant (11, 15, 16) raccordé par le réseau Ethernet, qui est conçu pour le traitement de données destinées au composant à partir d'une trame Ethernet-MAC au moyen d'un protocole différent d'un protocole de trame globale.

10. Installation selon la revendication 9, **caractérisée par** au moins un second composant (11) agencé pour le traitement de données selon le protocole ProfiNet.

11. Installation selon l'une quelconque des revendications précédentes, **caractérisée en ce qu'**au moins un premier composant (5, 7, 9, 11) est conçu comme répéteur pour des télégrammes qui ne contiennent pas des données de trame globale.

12. Installation selon l'une quelconque des revendications précédentes, **caractérisée en ce que** les composants sont paramétrés de telle sorte que la transmission de télégrammes avec des trames globales incluses dans la trame Ethernet-MAC et d'autres télégrammes s'effectue dans des créneaux temporels successifs de longueur prédéfinies.

13. Installation selon l'une quelconque des revendications précédentes, **caractérisée en ce que** les composants sont paramétrés de telle sorte qu'un ordre de succession prédéfini de télégrammes avec des trames globales intégrées dans la trame Ethernet-MAC et d'autres télégrammes soit respecté.

14. Installation selon l'une quelconque des revendications précédentes, l'installation étant **caractérisée en ce qu'**elle comprend une installation de production automatisée.

15. Installation selon l'une quelconque des revendications précédentes, **caractérisée en ce qu'**au moins un premier composant (5, 7, 9, 11) présente une mémoire intermédiaire (25) qui collecte des données à envoyer, le composant étant agencé pour transmettre les données collectées après la transmission du télégramme avec la trame globale.

16. Installation selon l'une quelconque des revendications précédentes, **caractérisée en ce que** plusieurs premiers composants (5, 7, 9, 11) sont interconnectés entre eux en forme d'anneau.

17. Installation selon l'une quelconque des revendications précédentes, l'installation étant **caractérisée en ce qu'**elle comporte au moins une station d'entrée/sortie (2) avec plusieurs premiers composants (5, 7, 9, 11), des données étant transmises aux premiers composants (5, 7, 9, 11) de la station d'entrée/sortie (2) dans des télégrammes avec à chaque fois une trame globale qui contient les données d'un cycle de bus pour les premiers composants (5, 7, 9, 11).

18. Installation selon l'une quelconque des revendications précédentes, **caractérisée en ce que** plusieurs premiers composants (5, 7, 9, 11) sont regroupés en une station d'entrée/sortie (2) qui est commandée par une commande à programme enregistré.

19. Procédé pour la transmission de données dans une installation (1) comprenant plusieurs composants (5, 7, 9, 11) reliés les uns aux autres par un réseau Ethernet, en particulier dans une installation (1) selon l'une quelconque des revendications précédentes, en particulier pour la commande d'un processus de production automatisée, dans lequel une trame globale est générée, la trame globale est intégrée dans la partie de données d'une trame Ethernet-MAC et un code d'identification est inséré, dans lequel la trame Ethernet-MAC contient une trame globale pour le traitement selon un protocole de bus de terrain, dans lequel la trame Ethernet-MAC est transmise alors sous forme de télégramme par le réseau Ethernet et extrait par au moins un premier composant (5, 7, 9, 11), qui est conçu pour le traitement de données selon un protocole de bus de terrain, des données destinées au composant d'une trame globale selon un protocole de trame globale de la trame globale dans la trame Ethernet-MAC, en réaction à la constatation que le code d'identification est présent, dans lequel plusieurs premiers composants (6) sont reliés au réseau Ethernet, et dans lequel les composants (6) présentent un commutateur inverseur (54) qui permet de court-circuiter leurs registres à décalage (52) et de connecter un circuit de reconnaissance (55) à la ligne de transmission, **caractérisé en ce qu'**une sauvegarde de données simultanée est effectuée par plusieurs premiers composants (5, 7, 9, 11) en réaction à un signal de commande reconnu par le circuit de reconnaissance (52) après une transmission d'un télégramme avec des trames globales incluses dans la trame Ethernet-MAC.

20. Procédé selon la revendication 19, **caractérisé en ce que** le trafic du bus avec le, au moins un, composant, qui est conçu pour le traitement de données selon un protocole de bus de terrain, est commandé par une unité maître (20) d'une station tête de ligne (5).

21. Procédé selon la revendication 20, **caractérisé en ce qu'**une trame globale avec des données de commande est générée dans la station tête de ligne avec l'unité maître, est intégrée dans la partie de données d'une trame Ethernet-MAC et la trame Ethernet-MAC est transmise par le réseau Ethernet à au moins un composant (5, 7, 9, 11) qui est conçu pour le traitement de données selon un protocole de bus de terrain.

22. Procédé selon l'une quelconque des revendications 19 à 21, **caractérisé en ce que** plusieurs, de préférence tous les, composants (5, 7, 9 ,11) sont commandés avec un dispositif pour l'extraction de données destinées au composant d'une trame globale au moyen d'un protocole de trame globale par l'intermédiaire de données dans une trame globale commune.

23. Procédé selon l'une quelconque des revendications 19 à 22, **caractérisé en ce qu'**au moins un composant (5, 7, 9, 11), qui est conçu pour le traitement de données selon un protocole de bus de terrain, insère des données destinées à un autre composant dans la trame globale Ethernet-MAC en réaction à la constatation que le code d'identification est présent.

24. Procédé selon l'une quelconque des revendications 19 à 23, **caractérisé en ce que** le code d'identification est inséré dans l'en-tête de la trame Ethernet-MAC.

25. Procédé selon l'une quelconque des revendications 19 à 24, **caractérisé en ce que**, en réaction au fait que le code d'identification indique la présence de données de trame globale dans la trame Ethernet-MAC, un dispositif commutateur (44) du premier composant amène les données de trame globale à un dispositif pour l'extraction de données destinées au composant de la trame globale.

26. Procédé selon la revendication 25, **caractérisé en ce que**, en réaction au fait que le code d'identification indique l'absence de données de trame globale dans la trame Ethernet-MAC, le dispositif commutateur (44) fait passer les données devant le dispositif pour l'extraction de données destinées au composant (5, 7, 9, 11) de la trame globale.

27. Procédé selon la revendication 25 ou 26, **caractérisé en ce que**, en réaction au fait que le code d'identification indique l'absence de données de trame globale dans la trame Ethernet-MAC, mais la destination des données de trame pour ce composant, le dispositif commutateur (44) amène les données à un autre dispositif de traitement interne du premier composant (5, 7, 9, 11).

28. Procédé selon l'une quelconque des revendications précédentes 19 à 27, **caractérisé en ce que** la transmission de télégrammes avec des trames globales incluses dans la trame Ethernet-MAC et d'autres télégrammes s'effectue dans des créneaux temporels consécutifs de longueur prédéfinie.

29. Procédé selon l'une quelconque des revendications précédentes 19 à 28, **caractérisé en ce qu'**un ordre de succession prédéfini de télégrammes avec des trames globales intégrées dans la trame Ethernet-MAC et d'autres télégrammes est respecté.

30. Procédé selon l'une quelconque des revendications précédentes 19 à 29, **caractérisé en ce que** des données à envoyer par un premier composant sont collectées dans une mémoire intermédiaire (25) et sont transmises après la transmission du télégramme avec la trame globale.
